# EUROPÄISCHE PATENTANMELDUNG

(11) **EP 4 851 601 A1**
(43) Veröffentlichungstag der Anmeldung: **09.12.2026**
(21) Anmeldenummer: 26180752.3
(22) Anmeldetag: 22.05.2026
(51) Int. Cl.: G01N 1/22, G01N 1/24

(54) **VORRICHTUNG, MOBILE PLATTFORM UND VERFAHREN ZUR AUTOMATISIERTEN PROBENAHME VON GASFÖRMIGEN STOFFEN, COMPUTERPROGRAMMPRODUKT UND VORRICHTUNG ZUR DATENVERARBEITUNG**

(30) Priorität: 03.06.2025 DE 102025121521
(71) Anmelder: Deutsches Zentrum für Luft- und Raumfahrt e.V., 53227 Bonn (DE)
(72) Erfinder: Geiß, Dr. Christoph, 74239 Hardthausen (DE); Klaffki, Kirsten, 74239 Hardthausen (DE); Grzesiak, Dr. Jonas, 74239 Hardthausen (DE)
(74) Vertreter: RPK Patentanwälte Reinhardt und Kaufmann Partnerschaft mbB

(57) **Zusammenfassung**

Die Erfindung betrifft eine Vorrichtung (100) zur automatisierten Probenahme von gasförmigen Stoffen mittels Probenahme-Röhrchen (50) zur Aufnahme der gasförmigen Stoffe, umfassend eine Probenhalterung (10), mit einer Einrichtung (11, 13), die eine umgebungsseitige Einrichtung (11) oder eine pumpenseitige Einrichtung (13) ist, mit Anschlusselementen (12, 14), wobei jedes der Probenahme-Röhrchen (50) an jeweils eines der Anschlusselemente (12, 14) der umgebungsseitigen Einrichtung (11) und/oder der pumpenseitigen Einrichtung (13) gasdicht anschließbar ist; Pumpenanschlüsse (41) für eine Pumpe (40), wobei jeweils ein pumpenseitiges Anschlusselement (14) der pumpenseitigen Einrichtung (13) der Einrichtung (11, 13) über den jeweiligen Pumpenanschluss (41) mit der Pumpe (40) pneumatisch verbunden ist; sowie eine Steuereinheit (60), welche einen Betrieb der Pumpe (40) steuert und/oder regelt, wobei die umgebungsseitige Einrichtung (11) von Anschlusselementen (12) mit einer Umgebung (88) pneumatisch verbunden ist.

Die Erfindung betrifft ferner eine mobile Plattform (200) mit einer solchen Vorrichtung (100) und ein Verfahren zum Betreiben einer solchen Vorrichtung.

## Beschreibung

### Stand der Technik

Die Erfindung betrifft eine Vorrichtung, eine mobile Plattform und ein Verfahren zur automatisierten Probenahme von gasförmigen Stoffen, insbesondere von Luft, mittels Probenahme-Röhrchen zur Aufnahme der gasförmigen Stoffe, sowie ein Computerprogrammprodukt und eine Vorrichtung zur Datenverarbeitung zum Ausführen eines solchen Verfahrens.

Zur Feststellung, ob chemische und/oder biologische Gefahrstoffe in gasförmiger bzw. aerosolisierter Form in der Umgebungsluft sind, werden bei potenziellen Gefahrenlagen entsprechende Adsorptionsröhrchen oder Filter verwendet. Diese werden mit der zu untersuchenden Umgebungsluft begast und anschließend einer weiteren Analytik zugeführt. Beispielsweise im Fall von Adsorptionsröhrchen werden die damit gesammelten Stoffe im Labor gaschromatografisch desorbiert und analysiert.

Die hierfür verfügbaren Röhrchen und Filter werden händisch und vor Ort begast. Damit geht eine potenzielle Gefährdung der ausführenden Person aus.

Durch das händische Begasen müssen bei einer Messung von unterschiedlich zu verwendenden Röhrchen/Filtern, beispielsweise mit unterschiedlichen benötigten Gasvolumen, die Röhrchen ebenfalls händisch nacheinander verwendet werden oder die Röhrchen/Filter aufeinander abgestimmt sein.

Einsatzbereiche sind dabei in der Industrie zur Überwachung von Luftqualität und Gasen an Arbeitsplätzen, beispielsweise in der chemischen Industrie, in der Metallbearbeitung oder in der Abfallbehandlung. Im Umweltschutz werden Schadstoffe in der Luft bestimmt. Bei der Sicherheitsüberwachung werden gefährliche Gase kontrolliert, um die Sicherheit von Mitarbeitern oder Anwohnern zu gewährleisten.

Die verwendeten Röhrchen werden bisher mit Handpumpen einzeln und/oder nacheinander mit Luft bzw. Gas beaufschlagt. Das zu beprobende Volumen ist durch das Hubvolumen der Handpumpe festgelegt, das typischerweise bei 100 ml oder 200 ml pro Hub liegt. Daher werden bei einer Probennahme Messungen mit einem Hub und mit zehn Hüben durchgeführt.

Bei der Probenahme zieht der Benutzer eine definierte Menge Luft mit einer Handpumpe durch das Probenahme-Röhrchen. Die Luft strömt durch das Probenahme-Röhrchen, das eine Chemikalie enthält. Wenn die Luft das zu messende Gas enthält und in Kontakt mit der Chemikalie kommt, reagiert es und führt zu einer sichtbaren Farbveränderung, die in dem Probenahme-Röhrchen ablesbar ist. Bei Verwendung von Analyseröhrchen mit Farbumschlag kann der Benutzer die Länge der Farbreaktion messen und die Konzentration des Gases anhand einer auf dem Probenahme-Röhrchen aufgedruckten Skala ablesen.

Die Veränderung in der Farbintensität oder Länge der Farbänderung gibt Aufschluss über die Konzentration des gasförmigen Stoffes in der Luft. Bei Verwendung eines Thermoadsorptionsröhrchens wird das Probenahme-Röhrchen im Nachgang im Labor über ein Gaschromatografie-Gerät ausgeheizt und gaschromatografisch analysiert.

Die DE 102010035728 B4 beschreibt ein Verfahren zum Betrieb einer Gas-Probenahme-Vorrichtung zur colorimetrischen Gasanalyse. Dabei wird eine Vorrichtung zur Steuerung des Volumenstromes einer elektrischen Pumpe für Probenahme-Röhrchen verwendet, die für die Detektion von Luftschadstoffen mit Hilfe von Probenahme-Röhrchen eingesetzt wird.

In der DE 69319560 T2 ist beispielsweise eine durchflusskontrollierte Pumpe zur Probenahme offenbart, welche den Durchfluss der Luft durch die Probenahme-Röhrchen steuert.

Bei der CN 112557127 A werden zur Probenahme keine Probenahme-Röhrchen eingesetzt, sondern es wird stattdessen zur Zwischenspeicherung des aufgenommenen Gases ein Gasspeicher verwendet, über den zunächst ein Gasmessvolumen gespeichert wird, das anschließend über eine Analyseeinrichtung analysiert wird.

Die KR 20150060443 A beschreibt eine Probenahme-Vorrichtung, bei der Probenahme-Röhrchen über eine gemeinsame Ansaugvorrichtung für alle Probenahme-Röhrchen mit dem Gas befüllt werden. Die Probenahme-Röhrchen können einzeln über Ventile angesteuert werden.

### Offenbarung der Erfindung

Die Aufgabe der Erfindung ist die Schaffung einer verbesserten Vorrichtung zur automatisierten Probenahme von gasförmigen Stoffen, insbesondere von Luft, mittels Probenahme-Röhrchen zur Aufnahme der gasförmigen Stoffe.

Eine weitere Aufgabe ist es, eine mobile Plattform mit einer solchen Vorrichtung zu schaffen.

Eine weitere Aufgabe ist es, ein Verfahren zum Betreiben einer solchen Vorrichtung anzugeben.

Eine weitere Aufgabe ist es, ein Computerprogrammprodukt zum Ausführen eines solchen Verfahrens zu schaffen.

Eine weitere Aufgabe ist es, eine Vorrichtung zur Datenverarbeitung zum Ausführen eines solchen Verfahrens zu schaffen.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Nach einem Aspekt der Erfindung wird eine Vorrichtung zur automatisierten Probenahme von gasförmigen Stoffen, insbesondere von Luft, mittels Probenahme-Röhrchen zur Aufnahme der gasförmigen Stoffe vorgeschlagen, umfassend i) eine Probenhalterung, mit wenigstens einer Einrichtung, die wenigstens eine umgebungsseitige Einrichtung oder wenigstens eine pumpenseitige Einrichtung ist, mit Anschlusselementen, wobei jedes der Probenahme-Röhrchen an jeweils eines der Anschlusselemente der wenigstens einen umgebungsseitigen Einrichtung und/oder der wenigstens einen pumpenseitigen Einrichtung gasdicht anschließbar ist, ii) Pumpenanschlüsse für eine Pumpe, wobei jeweils ein pumpenseitiges Anschlusselement der pumpenseitigen Einrichtung der wenigstens einen Einrichtung über den jeweiligen Pumpenanschluss mit der Pumpe pneumatisch verbunden ist, iii) eine Steuereinheit, welche einen Betrieb der Pumpe steuert und/oder regelt. Dabei ist die umgebungsseitige Einrichtung von Anschlusselementen mit einer Umgebung pneumatisch verbunden.

Bei der vorgeschlagenen Vorrichtung können in der Probenhalterung unterschiedliche Typen von Probenahme-Röhrchen parallel angeordnet werden. Eine Pumpe, welche über eine Steuereinheit angesteuert wird, sorgt für ein kontrolliertes Durchströmen der Probenahme-Röhrchen mit Luft. Anschließend können die Probenahme-Röhrchen analysiert und so die Art und Menge eines gasförmigen Stoffes in der Luft bestimmt werden.

Mittels der vorgeschlagenen Vorrichtung können so mehrere Probenahme-Röhrchen gleichzeitig oder nacheinander verwendet werden, ohne dass die Probenahme-Röhrchen getauscht werden müssen. Hierbei können unterschiedliche Probenahme-Röhrchen miteinander kombiniert werden, die beispielsweise unterschiedliche Abmessungen aufweisen. Die Probenahme-Röhrchen können nacheinander oder parallel verwendet werden.

Die Probennahme-Röhrchen können vollständig auf der Probenhalterung angeordnet sein oder teilweise auf der Probenhalterung angeordnet sein oder separat davon angeordnet sein. Bei separater Anordnung sind die Probennahme-Röhrchen fluidmäßig mit den Einrichtungen mit Anschlusselementen verbunden.

Entsprechend kann auf der Probenhalterung beispielsweise eine pumpenseitige Einrichtung mit Anschlusselementen oder eine umgebungsseitige Einrichtung mit Anschlusselementen oder eine umgebungsseitige und eine pumpenseitige Einrichtung mit Anschlusselementen angeordnet sein. Sind die Probennahme-Röhrchen separat von der Probenhalterung angeordnet, können umgebungsseitige und pumpenseitige Einrichtungen mit ihren Anschlusselementen zusammengeschoben eine Einheit bilden, auf der auf einer Seite die Probennahme-Röhrchen und auf der anderen Seite eine Pumpe angeschlossen ist.

Möglich ist eine automatisierte, teleoperierte Entnahme einer Luftprobe. Jeweils ausgewählte Probenahme-Röhrchen können automatisiert begast werden. Durch die Verwendung beispielsweise einer Gasmembranpumpe, eines Durchflussreglers und eines gesteuerten Ventilblocks kann die Vorrichtung ferngesteuert werden. Die Nutzung einer Batterie ermöglicht zudem einen ortsunabhängigen mobilen Betrieb.

Die Vorrichtung weist günstigerweise eine separate Ansaugvorrichtung mit einem eigenen Anschluss für jedes Probenahme-Röhrchen auf. Vorteilhaft können so Kreuzkontaminationen vermieden werden.

Die Vorrichtung ermöglicht das Einstellen individueller Messparameter sowie eine Georeferenzierung der entnommenen Proben. Das Gasvolumen kann für jedes Probenahme-Röhrchen individuell eingestellt werden. Damit können unterschiedliche Messaufgaben durchgeführt werden.

Über ein Positionsbestimmungssystem wie beispielsweise ein Global Navigation Satellite System (GNSS)-Logging-Modul, können die Position und ein Zeitstempel der Probenentnahme exakt dokumentiert werden und so die Aufnahme eines georeferenzierten Konzentrationsverlaufs des gasförmigen Stoffes erfolgen.

An die Vorrichtung kann ein Ansaugschnorchel adaptiert werden, der beispielsweise so konzipiert ist, dass eine Ansaugstelle für die Probenahme außerhalb des sogenannten Down-Wash-Bereichs des Rotors eines unbemannten Luftfahrzeugs liegt, sodass eine Verfälschung von Messergebnissen durch Verwirbelungen der Luft durch die Rotoren des unbemannten Luftfahrzeugs vermieden werden können.

Die Vorrichtung kann mobil zum Messen von Gefahrstoffen und/oder Kampfstoffen eingesetzt werden. Vorteilhaft kann so die Probenhalterung der Probenahme-Röhrchen und deren dichter Anschluss an das Gasführungs- und Pumpensystem der Vorrichtung gewährleistet werden.

Die Vorrichtung kann vorteilhaft von Einsatzkräften der Behörden und Organisationen mit Sicherheitsaufgaben genutzt werden.

Ebenso kann ein Einsatzgebiet im wehrtechnischen Umfeld des ABC-Schutzes (Schutz vor atomaren, biologischen und chemischen Gefahren) sein.

Auch in Betrieben der chemischen Industrie kann die Vorrichtung in der Gasanalytik bei der Überwachung der Betriebsanlagen verwendet werden.

Wenn die wenigstens eine Einrichtung sowohl eine umgebungsseitige Einrichtung als auch eine pumpenseitige Einrichtung aufweist, kann die umgebungsseitige Einrichtung mit der Umgebung in Strömungskontakt stehen und die pumpenseitige Einrichtung an die Pumpe zum Absaugen der Luft aus der Vorrichtung angeschlossen sein.

Nach einer günstigen Ausgestaltung der Vorrichtung kann die wenigstens eine Einrichtung von Anschlusselementen sowohl eine umgebungsseitige Einrichtung als auch eine pumpenseitige Einrichtung aufweisen und jedes der Probennahme-Röhrchen zwischen jeweils einem der Anschlusselemente der umgebungsseitigen und der pumpenseitigen Einrichtung gasdicht angeordnet sein. So kann Luft aus der Umgebung mittels der Pumpe angesaugt, durch die Probenahme-Röhrchen geleitet und hinter der Pumpe wieder ausgestoßen werden.

Nach einer günstigen Ausgestaltung der Vorrichtung kann die wenigstens eine Einrichtung von Anschlusselementen sowohl eine umgebungsseitige Einrichtung als auch eine pumpenseitige Einrichtung aufweisen, deren Anschlusselemente gasdicht miteinander verbunden sein können und jeweils das umgebungsseitige Anschlusselement mittels einer Verbindungsleitung mit dem Probenahme-Röhrchen pneumatisch verbunden oder verbindbar sein kann und das Probenahme-Röhrchen mit der Umgebung pneumatisch verbunden sein kann. Vorteilhaft können die einander gegenüber liegenden Anschlusselemente durch Zusammenschieben in axialer Richtung gasdicht verbunden werden. Dadurch kann die Probenhalterung auch verwendet werden, wenn das Probenahme-Röhrchen nicht in der Probenhalterung eingesetzt ist, sondern zur Messung über eine Verbindungsleitung an ein Anschlusselement angeschlossen außerhalb der Vorrichtung angebracht wird.

Unter umgebungsseitigem Anschlusselement wird dabei ein Anschlusselement einer umgebungsseitigen Einrichtung verstanden und unter pumpenseitigem Anschlusselement wird ein Anschlusselement einer pumpenseitigen Einrichtung verstanden.

Nach einer günstigen Ausgestaltung der Vorrichtung kann die wenigstens eine Einrichtung von Anschlusselementen sowohl eine umgebungsseitige Einrichtung als auch eine pumpenseitige Einrichtung aufweisen, deren Anschlusselemente jeweils in einer axialen Richtung einander gegenüber liegend angeordnet sein können und wenigstens eines der beiden einander gegenüber liegenden Einrichtungen von Anschlusselementen in der axialen Richtung verschiebbar sein kann. Damit können Probenahme-Röhrchen unterschiedlicher Länge in dem Probenhalter dicht angeordnet werden. Beispielsweise können die Probenahme-Röhrchen parallel zueinander angeordnet sein, insbesondere in einer Ebene parallel zueinander angeordnet sein.

Nach einer günstigen Ausgestaltung der Vorrichtung können die Anschlusselemente der pumpenseitigen Einrichtung in einer Querrichtung nebeneinander angeordnet sein. Die pumpenseitige Einrichtung kann so vorteilhaft eine Anschlussbank für die Probenahme-Röhrchen bilden.

Nach einer günstigen Ausgestaltung der Vorrichtung können die Anschlusselemente der umgebungsseitigen Einrichtung in einer Querrichtung nebeneinander angeordnet sein. Die umgebungsseitige Einrichtung kann so vorteilhaft eine Anschlussbank für die Probenahme-Röhrchen bilden.

Nach einer günstigen Ausgestaltung der Vorrichtung kann die umgebungsseitige Einrichtung ein Wandelement mit Durchbrüchen aufweisen oder als Wandelement mit Durchbrüchen ausgebildet sein, wobei ein Ende der Probennahme-Röhrchen in die Durchbrüche einsteckbar sein kann. Dadurch befinden sich die Probenahme-Röhrchen an einer Außenwand der Vorrichtung direkt in der zu untersuchenden Umgebung.

Nach einer günstigen Ausgestaltung der Vorrichtung kann die wenigstens eine Einrichtung von Anschlusselementen zur Aufnahme von Probenahme-Röhrchen mit unterschiedlichem Durchmesser und/oder unterschiedlicher Länge ausgebildet sein. Vorteilhaft können so unterschiedliche Typen von Probenahme-Röhrchen, beispielsweise von verschiedenen Herstellern und zur Analyse unterschiedlicher gasförmiger Stoffe, verwendet werden.

Nach einer günstigen Ausgestaltung der Vorrichtung können die Anschlusselemente Gasanschlussstutzen, insbesondere Steckanschlüsse für wenigstens eine Verbindungsleitung, aufweisen, welche mit der Umgebung oder der Pumpe pneumatisch verbunden ist. Dadurch kann ein dichtes Gasführungssystem der Vorrichtung realisiert werden.

Nach einer günstigen Ausgestaltung der Vorrichtung kann die Probenhalterung zwischen den Einrichtungen Auflagebänke zur Abstützung der Probenahme-Röhrchen aufweisen. Die Probenahme-Röhrchen, die meist aus Glas ausgebildet sind, können so auch für mobile Einsätze unter teilweise rauen Bedingungen sicher gehalten werden.

Nach einer günstigen Ausgestaltung der Vorrichtung kann die Probenhalterung Schlittenschienen aufweisen, auf denen wenigstens eine der Einrichtungen von Anschlusselementen in axialer Richtung verschiebbar angeordnet ist. Damit können Probenahme-Röhrchen unterschiedlicher Länge in dem Probenhalter dicht angeordnet werden.

Nach einer günstigen Ausgestaltung der Vorrichtung können die Anschlusselemente der wenigstens einen Einrichtung jeweils wenigstens ein erstes Dichtelement, insbesondere einen O-Ring, zur Abdichtung einer Anschlussöffnung des jeweiligen Probenahme-Röhrchens und/oder wenigstens ein zweites Dichtelement, insbesondere eine umlaufende Flachdichtung, zur Abdichtung eines Mittelteils des jeweiligen Probenahme-Röhrchens aufweisen. Damit können auch Probenahme-Röhrchen unterschiedlicher Durchmesser und/oder Länge in derselben Probenhalterung eingesetzt werden.

Nach einer günstigen Ausgestaltung der Vorrichtung kann zwischen der pumpenseitigen Einrichtung und der Pumpe ein Durchflussregler pneumatisch angeordnet sein. So kann das für die Messung verwendete Gasvolumen, das in das Probenahme-Röhrchen eingebracht wird, gezielt eingestellt werden.

Nach einer günstigen Ausgestaltung der Vorrichtung können die Anschlusselemente der pumpenseitigen Einrichtung mit einer Ventilsteuerung pneumatisch verbunden sein oder als Ventilsteuerung ausgebildet sein. Vorteilhaft können so einzelne Probenahme-Röhrchen gezielt für eine Messung ausgewählt werden.

Nach einer günstigen Ausgestaltung der Vorrichtung kann die Steuereinheit eine Verbindung zu dem Durchflussregler und/oder der Ventilsteuerung aufweisen, um diese zu steuern und/oder zu regeln. Insbesondere kann dabei die Steuereinheit eine Steuerplatine zum Steuern und/oder Regeln der Pumpe und/oder des Durchflussreglers und/oder der Ventilsteuerung aufweisen oder mit der Steuerplatine elektrisch verbunden sein. Auf diese Weise können die Probenahme-Röhrchen gezielt für die Messung angesteuert und/oder das zu messende Gasvolumen genau abgemessen werden.

Nach einer günstigen Ausgestaltung kann die Vorrichtung ein Funksystem, insbesondere ein langreichweitiges Funksystem, und/oder ein Positionsbestimmungssystem umfassen, welche mit der Steuereinheit elektrisch verbunden sind. Dadurch können Positionsdaten einzelnen Messungen und/oder Probenahme-Röhrchen zugeordnet werden. Außerdem kann die Vorrichtung Daten über das Funksystem zur Protokollierung der Messung unmittelbar an eine Bodenstation senden. Auch kann die Vorrichtung über das Funksystem der Bodenstation gesteuert werden.

Nach einer günstigen Ausgestaltung der Vorrichtung kann die umgebungsseitige Einrichtung gasdichte Verschlüsse, insbesondere schaltbare gasdichte Verschlüsse, aufweisen oder mit gasdichten Verschlüssen pneumatisch verbunden sein. Auf diese Weise kann ein Zufluss von Luft zur Probenahme in die Probenahme-Röhrchen für jedes einzelne Probenahme-Röhrchen gesteuert werden.

Nach einer günstigen Ausgestaltung der Vorrichtung können die umgebungsseitigen Anschlusselemente mit Verbindungsleitungen, insbesondere mit Ansaugschnorcheln, pneumatisch verbunden sein. Dadurch kann die Luft an einer für die Probenahme günstigen Stelle entnommen werden, ohne dass das Probenahme-Röhrchen direkt an dieser Stelle platziert sein muss.

Nach einer günstigen Ausgestaltung der Vorrichtung kann die wenigstens eine Einrichtung von Anschlusselementen sowohl eine umgebungsseitige Einrichtung als auch eine pumpenseitige Einrichtung aufweisen, die in axialer Richtung zusammengeschoben und gasdicht verbunden sein können und wobei die umgebungsseitigen Anschlusselemente mittels Verbindungsleitungen mit Probenahme-Röhrchen pneumatisch verbunden sein können, deren Anschlussöffnungen mit der Umgebung pneumatisch verbunden sind. Insbesondere kann dabei wenigstens eines der Probenahme-Röhrchen in einem Probenhalter mit wenigstens zwei Einrichtungen von Anschlusselementen angeordnet sein, wobei eines der beiden Anschlusselemente mit der Verbindungsleitung pneumatisch verbunden ist. Beispielsweise kann das Probenahme-Röhrchen an einem unbemannten Luftfahrzeug so sicher an einer Stelle angebracht werden, an der eine Störung der Messung durch Verwirbelungen im so genannten Down-Wash-Bereich des unbemannten Luftfahrzeugs vermieden werden kann.

Nach einer günstigen Ausgestaltung der Vorrichtung kann die Steuereinheit ausgebildet sein, bei einer Probenahme für jedes Probenahme-Röhrchen spezifisch wenigstens einen der Parameter abzuspeichern: Messparameter, ISO-Zeitstempel des Messzeitpunkts, Datum- und Zeitstempel, Geokoordinaten der Messposition, verwendetes Ventil und/oder Probenahme-Röhrchen, eingestellter SOLL-Gasvolumenstrom, gemessener IST-Gasvolumenstrom und/oder gemessenes Gas-Gesamtvolumen. So können die für eine Dokumentation der Messung wichtigen Parameter jedem einzelnen Probenahme-Röhrchen zugeordnet werden.

Vorteilhaft können die Parameter mittels des Funksystems an eine Bodenstation übermittelt werden. Damit ist eine direkte Archivierung und Verarbeitung der für die Dokumentation der Messung wichtigen Parameter möglich.

Nach einem weiteren Aspekt der Erfindung wird eine mobile Plattform mit einer erfindungsgemäßen Vorrichtung vorgeschlagen, umfassend ein unbemanntes Luftfahrzeug, insbesondere eine Drohne, oder eine robotische Plattform, wobei die Vorrichtung in einem Gehäuse angeordnet ist, welches mit dem Luftfahrzeug oder der robotischen Plattform verbunden ist, insbesondere abnehmbar verbunden ist.

Die Vorrichtung zur automatisierten Probenahme von gasförmigen Stoffen, insbesondere von Luft, mittels Probenahme-Röhrchen zur Aufnahme der gasförmigen Stoffe kann aufgrund des kompakten Designs sowie der Verwendung kompakter Komponenten an unterschiedlichen mobilen Plattformen zur georeferenzierten Probennahme eingesetzt werden.

Die mobile Plattform kann so beispielsweise zur georeferenzierten Probennahme beim Messen von Gefahrstoffen und/oder Kampfstoffen eingesetzt werden.

Vorteilhaft kann die Vorrichtung in einer vertikalen Richtung oberhalb oder unterhalb eines Luftfahrzeugs angeordnet sein.

Nach einer günstigen Ausgestaltung der mobilen Plattform können umgebungsseitige Anschlusselemente der Vorrichtung mit Verbindungsleitungen, insbesondere mit Ansaugschnorcheln, pneumatisch verbunden sein, deren Eingangsöffnungen an einer lateralen Außenbegrenzung des Luftfahrzeugs angeordnet sind. An die Vorrichtung kann ein Ansaugschnorchel adaptiert werden, der beispielsweise so konzipiert ist, dass eine Ansaugstelle für die Probenahme beispielsweise außerhalb des sogenannten Down-Wash-Bereichs eines unbemannten Luftfahrzeugs liegt, sodass eine Verfälschung von Messergebnissen durch Verwirbelungen der Luft durch die Rotoren des unbemannten Luftfahrzeugs vermieden werden können.

Nach einer günstigen Ausgestaltung der mobilen Plattform kann eine umgebungsseitige Einrichtung und eine pumpenseitige Einrichtung der wenigstens einen Einrichtung von Anschlusselementen der Vorrichtung in axialer Richtung zusammengeschoben und gasdicht verbunden sein und die umgebungsseitigen Anschlusselemente mittels Verbindungsleitungen mit Probenahme-Röhrchen pneumatisch verbunden sein, deren Anschlussöffnungen an einer lateralen Außenbegrenzung des Luftfahrzeugs angeordnet sind. Beispielsweise kann das Probenahme-Röhrchen an einem unbemannten Luftfahrzeug so sicher an einer Stelle angebracht werden, an der eine Störung der Messung durch Verwirbelungen im so genannten Down-Wash-Bereich des unbemannten Luftfahrzeugs vermieden werden kann.

Nach einem weiteren Aspekt der Erfindung wird ein Verfahren zum Betreiben einer Vorrichtung vorgeschlagen, umfassend i) Inbetriebnahme der Vorrichtung; ii) Einlegen von Probenahme-Röhrchen in einer Probenhalterung der Vorrichtung; iii) Verbringen der Vorrichtung an einen Messort; iv) Durchführen einer automatisierten Probenahme von Gasproben, insbesondere von Luftproben, mit der Vorrichtung; v) Beenden der Probenahme und Rückführen der Vorrichtung; vi) Entnahme der Probenahme-Röhrchen; vii) Außerbetriebnahme der Vorrichtung.

Vorteilhaft kann nach dem vorgeschlagenen Verfahren eine automatisierte Probenahme von gasförmigen Stoffen, insbesondere von Luft, mittels Probenahme-Röhrchen zur Aufnahme der gasförmigen Stoffe durchgeführt werden.

Die Vorrichtung kann mobil zum Messen von Gefahrstoffen und/oder Kampfstoffen eingesetzt werden. Vorteilhaft kann die Probenhalterung der Probenahme-Röhrchen und deren dichter Anschluss an das Gasführungs- und Pumpensystem der Vorrichtung gewährleistet werden. Günstigerweise können unterschiedliche Typen von Probenahme-Röhrchen verwendet werden.

Das Verfahren kann vorteilhaft von Einsatzkräften der Behörden und Organisationen mit Sicherheitsaufgaben durchgeführt werden.

Ebenso kann ein Einsatzgebiet im wehrtechnischen Umfeld des ABC-Schutzes (Schutz vor atomaren, biologischen und chemischen Gefahren) sein.

Auch Betriebe der chemischen Industrie können nach dem Verfahren mittels Gasanalytik die Überwachung der Betriebsanlagen durchführen. Nach einer günstigen Ausgestaltung des Verfahrens kann beim Durchführen der Probenahme wenigstens ein Probenahme-Röhrchen durch Öffnen eines Ventils eines pumpenseitigen Anschlusselements ausgewählt und eine Pumpe der Vorrichtung für eine vorgegebene Zeitspanne aktiviert werden, sodass das wenigstens eine Probenahme-Röhrchen mit Gas befüllt wird. Nach Beenden der Probenahme kann das Ventil geschlossen werden. Auf diese Weise kann gezielt ein vorgegebenes Gasvolumen in einem bestimmten Probenahme-Röhrchen analysiert werden.

Nach einer günstigen Ausgestaltung des Verfahrens können beim Durchführen der Probenahme mehrere Probenahme-Röhrchen in einer Schleife nacheinander ausgewählt und mit Gas befüllt werden. Vorteilhaft können so auch Probenahme-Röhrchen unterschiedlicher Hersteller mit unterschiedlichen Maßen zur Analyse unterschiedlicher gasförmiger Stoffe eingesetzt werden.

Nach einer günstigen Ausgestaltung des Verfahrens kann die Probenahme mittels einer mobilen Plattform durchgeführt werden. Insbesondere kann die Probenahme mittels eines unbemannten Luftfahrzeugs, insbesondere einer Drohne, oder einer robotischen Plattform durchgeführt werden. Die mobile Plattform kann so beispielsweise zur georeferenzierten Probennahme beim Messen von Gefahrstoffen und/oder Kampfstoffen eingesetzt werden.

Nach einer günstigen Ausgestaltung des Verfahrens kann die Probenahme über ein Funksystem ferngesteuert und/oder automatisiert durchgeführt werden. Vorteilhaft kann ein Einsatzort mittels einer mobilen Plattform aus einer sicheren Entfernung entweder ferngesteuert oder völlig autonom auf schädliche gasförmige Stoffe untersucht werden.

Nach einem weiteren Aspekt der Erfindung wird ein Computerprogrammprodukt vorgeschlagen, umfassend Befehle, die bei ihrer Ausführung durch einen Computer diesen dazu veranlassen, ein erfindungsgemäßes Verfahren, insbesondere automatisch, auszuführen. Vorteilhaft kann so nach dem Verfahren eine automatisierte Probenahme von gasförmigen Stoffen, insbesondere von Luft, mittels Probenahme-Röhrchen zur Aufnahme der gasförmigen Stoffe durchgeführt werden.

Das erfindungsgemäße Computerprogrammprodukt kann ein Computerprogramm sein. Das erfindungsgemäße Verfahren kann dementsprechend also ganz oder teilweise computerimplementiert oder computerimplementierbar sein, also durch ein solches Computerprogramm oder einen entsprechenden Programmcode kodiert oder repräsentiert werden. Ebenso kann das erfindungsgemäße Computerprogrammprodukt ein computerlesbarer Datenträger sein, auf dem ein entsprechendes Computerprogramm gespeichert ist.

Das erfindungsgemäße Verfahren kann mittels einer entsprechend eingerichteten Datenverarbeitungseinrichtung, beispielsweise der erfindungsgemäßen Vorrichtung zur Datenverarbeitung, insbesondere automatisch oder teilautomatisch, durchgeführt werden. Als derartige Datenverarbeitungseinrichtung kann beispielsweise ein herkömmlicher Computer, eine herkömmliche Workstation, ein Großrechner oder dergleichen verwendet werden. Die Datenverarbeitungseinrichtung kann also insbesondere einen Prozessor, einen Mikrochip, eine integrierte Schaltung, eine Hardwareschaltung oder dergleichen zum Ausführen eines das Verfahren kodierenden oder repräsentierenden Computerprogramms oder Programmcodes umfassen.

Weiter kann die Datenverarbeitungseinrichtung insbesondere einen damit verbundenen flüchtigen und/oder nicht-flüchtigen Datenspeicher, eine oder mehrere Schnittstellen zum Empfangen und zum Ausgeben von Daten und/oder dergleichen mehr aufweisen. Die Datenverarbeitungseinrichtung kann eine oder mehrere Teileinrichtungen zum Ausführen der einzelnen Verfahrensschritte des erfindungsgemäßen Verfahrens aufweisen. Diese Teileinrichtungen können entsprechende Hardwareschaltungen oder Hardwaremodule, aber ebenso entsprechende Programmteile oder Programmmodule des genannten Computerprogramms, also beispielsweise eines Betriebsprogramms für die Datenverarbeitungseinrichtung, sein oder umfassen.

Nach einem weiteren Aspekt der Erfindung wird eine Vorrichtung zur Datenverarbeitung, aufweisend Mittel zum, insbesondere automatischen, Ausführen eines erfindungsgemäßen Verfahrens vorgeschlagen.

Diese Mittel können insbesondere die im Zusammenhang mit der genannten Datenverarbeitungseinrichtung beschriebenen Mittel sein. Die erfindungsgemäße Vorrichtung kann zum Ausführen des Verfahrens beziehungsweise des entsprechenden Computerprogramms oder Programmcodes also insbesondere einen entsprechenden Prozessor, einen Datenspeicher und wenigstens eine Eingabe- und/oder Ausgabeschnittstelle aufweisen. Insbesondere kann die erfindungsgemäße Vorrichtung das erfindungsgemäße Computerprogrammprodukt umfassen. Da die erfindungsgemäße Vorrichtung also insbesondere zum Ausführen des erfindungsgemäßen Verfahrens eingerichtet sein kann und das erfindungsgemäße Verfahren also mittels der erfindungsgemäßen Vorrichtung ausgeführt werden kann, kann die erfindungsgemäße Vorrichtung entsprechend einige oder alle der im Zusammenhang mit dem erfindungsgemäßen Verfahren beschriebenen Eigenschaften und/oder Merkmale aufweisen.

### Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Fig. 1: eine Schnittdarstellung einer Probenhalterung einer Vorrichtung zur automatisierten Probenahme von gasförmigen Stoffen, insbesondere von Luft, mit unterschiedlichen Probenahme-Röhrchen zur Aufnahme der gasförmigen Stoffe nach einem Ausführungsbeispiel der Erfindung;
- Fig. 2: ein Anschlusselement einer Einrichtung der Probenhalterung nach Fig. 1 mit einem Probenahme-Röhrchen;
- Fig. 3: ein Anschlusselement einer Einrichtung der Probenhalterung nach Fig. 1 mit einem anderen Probenahme-Röhrchen mit geringerem Durchmesser; und
- Fig. 4: einen schematischen Aufbau der Vorrichtung zur automatisierten Probenahme von gasförmigen Stoffen nach einem Ausführungsbeispiel der Erfindung;
- Fig. 5: eine Darstellung einer Steuerung der Vorrichtung über eine Bodenstation;
- Fig. 6: die Vorrichtung mit der Probenhalterung nach einem Ausführungsbeispiel der Erfindung;
- Fig. 7: die Vorrichtung mit der Probenhalterung nach einem weiteren Ausführungsbeispiel der Erfindung;
- Fig. 8: die Vorrichtung mit der Probenhalterung nach einem weiteren Ausführungsbeispiel der Erfindung;
- Fig. 9: die Vorrichtung mit der Probenhalterung nach einem weiteren Ausführungsbeispiel der Erfindung;
- Fig. 10: die Vorrichtung mit der Probenhalterung nach einem weiteren Ausführungsbeispiel der Erfindung;
- Fig. 11: eine mobile Plattform in Form eines unbemannten Luftfahrzeugs mit einer Vorrichtung zur automatisierten Probenahme von gasförmigen Stoffen, insbesondere von Luft, mittels Probenahme-Röhrchen nach einem Ausführungsbeispiel der Erfindung;
- Fig. 12: ein unbemanntes Luftfahrzeug mit einer Vorrichtung nach einem weiteren Ausführungsbeispiel der Erfindung;
- Fig. 13: ein unbemanntes Luftfahrzeug mit einer Vorrichtung nach einem weiteren Ausführungsbeispiel der Erfindung;
- Fig. 14: ein unbemanntes Luftfahrzeug mit einer Vorrichtung nach einem weiteren Ausführungsbeispiel der Erfindung;
- Fig. 15: eine mobile Plattform in Form einer robotischen Plattform mit einer Vorrichtung nach einem weiteren Ausführungsbeispiel der Erfindung;
- Fig. 16: einen Messablauf eines Verfahrens zum Betreiben einer Vorrichtung nach einem Ausführungsbeispiel der Erfindung; und
- Fig. 17: einen Ablauf einer Probenahme des Verfahrens nach einem Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor", "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

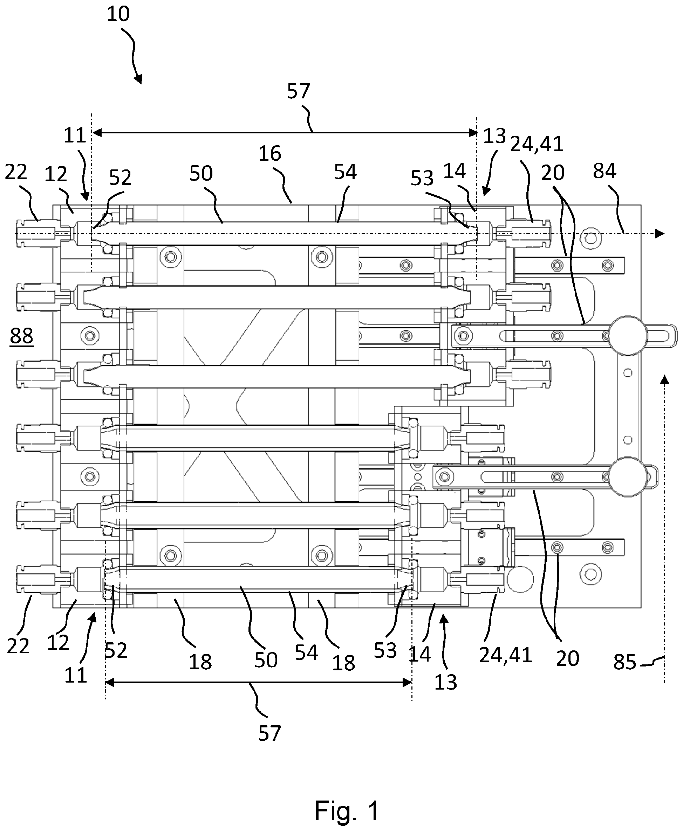

Figur 1 zeigt eine Schnittdarstellung einer Probenhalterung 10 einer Vorrichtung 100 zur automatisierten Probenahme von gasförmigen Stoffen, insbesondere von Luft, mit unterschiedlichen Probenahme-Röhrchen 50 zur Aufnahme der gasförmigen Stoffe nach einem Ausführungsbeispiel der Erfindung.

Die Probenhalterung 10 weist eine umgebungsseitige Einrichtung 11 mit Anschlusselementen 12 sowie eine pumpenseitige Einrichtung 13 mit Anschlusselementen 14 auf. Probenahme-Röhrchen 50 sind an die Anschlusselemente 12, 14 der Einrichtungen 11, 13 gasdicht angeschlossen.

Jedes der Probennahme-Röhrchen 50 ist dabei zwischen jeweils einem der Anschlusselemente 12, 14 der umgebungsseitigen und der pumpenseitigen Einrichtung 11, 13 gasdicht angeordnet.

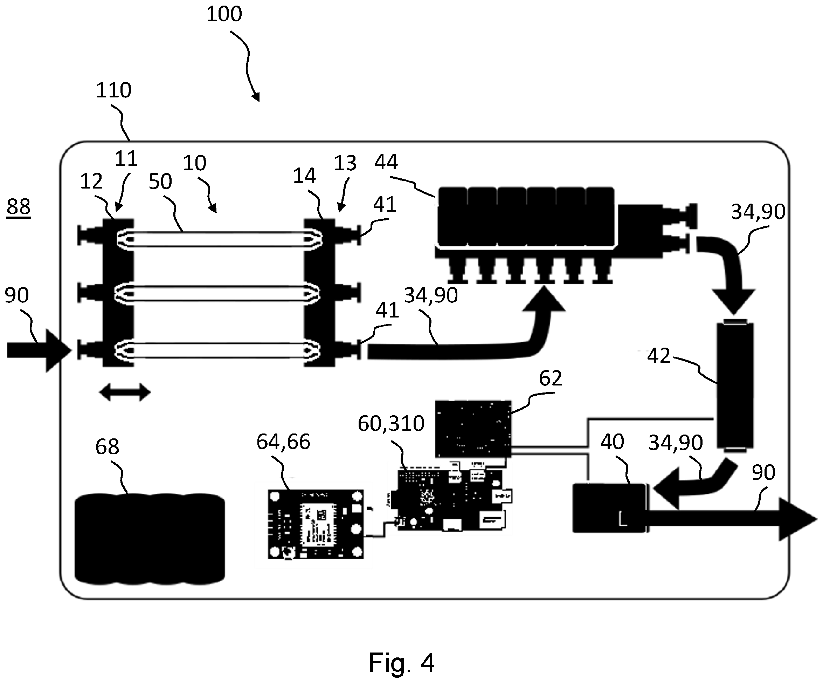

Jeweils ein pumpenseitiges Anschlusselement 14 der pumpenseitigen Einrichtung 13 kann über einen jeweiligen Pumpenanschluss 41, als Gasanschlussstutzen 24 ausgebildet, mit einer Pumpe 40 pneumatisch verbunden werden, wie in Figur 4 in der Gesamtdarstellung der Vorrichtung 100 dargestellt ist.

Die umgebungsseitige Einrichtung 11 von Anschlusselementen 12 kann über Gasanschlussstutzen 22 der Anschlusselemente 12 mit der Umgebung 88 pneumatisch verbunden werden.

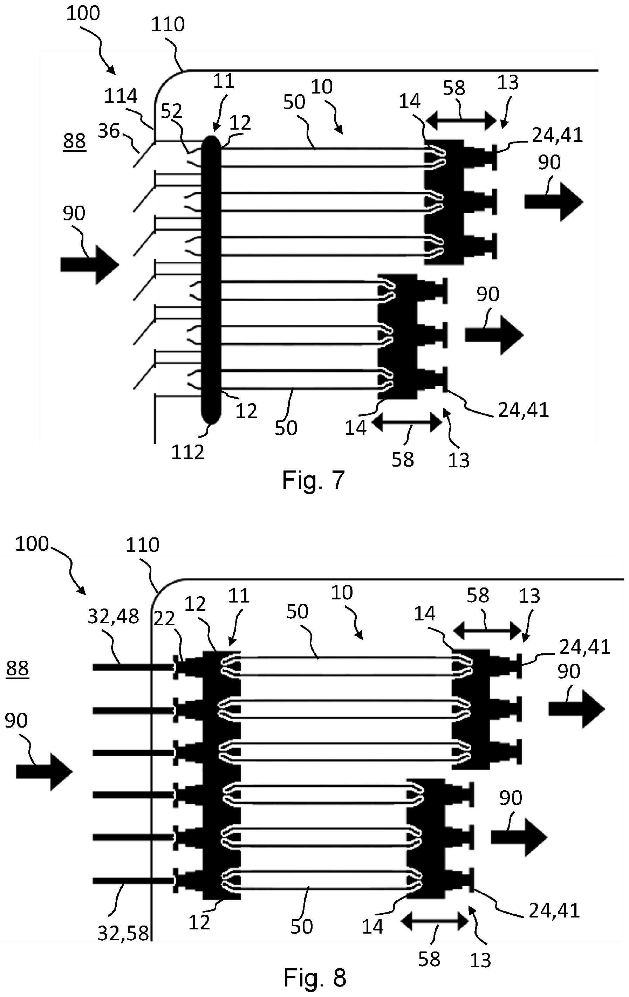

Die Gasanschlussstutzen 22, 24 können insbesondere, wie dargestellt, Steckanschlüsse für wenigstens eine Verbindungsleitung 32, 34 (siehe Figuren 8 bis 10), aufweisen, welche mit der Umgebung 88 oder der Pumpe 40 pneumatisch verbunden ist.

Die Gasanschlussstutzen 22, 24 können günstigerweise kommerziell verfügbare Schlauchsteckverbinder sein. Verbindungsleitungen 32, 34 können ebenfalls kommerziell verfügbare Schläuche sein.

Die zwei Einrichtungen 11, 13 von Anschlusselementen 12, 14 sind jeweils in einer axialen Richtung 84 einander gegenüber liegend angeordnet. Dabei ist wenigstens eines der beiden einander gegenüber liegenden Einrichtungen 11, 13 von Anschlusselementen 12, 14, in dem dargestellten Ausführungsbeispiel das pumpenseitige Anschlusselement 14, in der axialen Richtung 84 verschiebbar. Vorteilhaft ergibt sich eine parallele Anordnung der Probennahme-Röhrchen 50 in einer Ebene.

Dazu weist die Grundplatte 16 der Probenhalterung 10 beispielsweise zwei Schlittenschienen 20 auf, auf denen die Anschlusselemente 14 in axialer Richtung 84 verschiebbar angeordnet sind.

Die Anschlusselemente 14 der pumpenseitigen Einrichtung 13 sind in diesem Beispiel in einer Querrichtung 85 nebeneinander angeordnet und bilden so zwei Anschlussbänke, die wenigstens bereichsweise in axialer Richtung 84 auf der Grundplatte 16 verschiebbar sein können. Dies wird durch die parallele Anordnung der Probennahme-Röhrchen 50 erleichtert.

Ebenso können mehr als zwei Schlittenschienen 20 vorgesehen sein.

Die Anschlusselemente 12 der umgebungsseitigen Einrichtung 11 sind in der Querrichtung 85 nebeneinander angeordnet und bilden eine einzige Anschlussbank.

Es versteht sich, dass stattdessen die Anschlusselemente 12 der umgebungsseitigen Einrichtung 11 auf zwei oder mehr Schlittenschienen 20 angeordnet sein können oder sowohl die umgebungsseitige Einrichtung 11 als auch die pumpenseitigen Einrichtung 13 Schlittenschienen 20 aufweisen können.

Zwischen den Einrichtungen 11, 13 weist die Probenhalterung 10 Auflagebänke 18 zur Abstützung der Probenahme-Röhrchen 50 auf.

Die Einrichtungen 11, 13 von Anschlusselementen 12, 14 sind vorteilhaft zur Aufnahme von Probenahme-Röhrchen 50 mit unterschiedlichem Durchmesser 56 und/oder unterschiedlicher Länge 57 ausgebildet.

Die Aufnahme von Probenahme-Röhrchen 50 mit unterschiedlicher Länge 57 kann günstigerweise durch Verschieben der Anschlusselemente 14 der pumpenseitigen Einrichtung 13 auf den Schlittenschienen 20 realisiert werden.

Die Probenhalterung 10 dient so zur gleichzeitigen Verwendung von mehreren, unterschiedlichen, Probenahme-Röhrchen 50. Die Probenahme-Röhrchen 50 werden zwischen die beiden Einrichtungen 11, 13 in die vorgesehene Halterung gelegt und die beweglichen Anschlussbänke angedrückt. Durch den Anpressdruck werden die Anschlüsse der Probenahme-Röhrchen 50 abgedichtet.

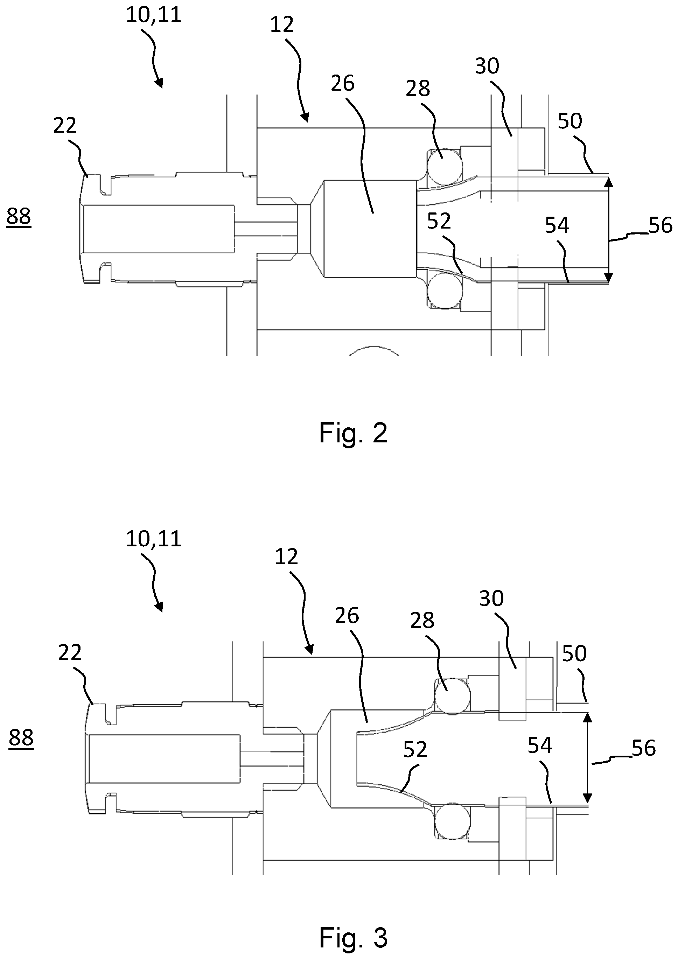

Die Aufnahme von Probenahme-Röhrchen 50 mit unterschiedlichem Durchmesser 56 ist in den Figuren 2 und 3 dargestellt, wo jeweils ein Anschlusselement 12 einer Einrichtung 11 der Probenhalterung 10 nach Figur 1 mit einem Probenahme-Röhrchen 50 dargestellt ist.

Das Anschlusselement 12 weist ein erstes Dichtelement 28, insbesondere einen O-Ring, zur Abdichtung einer Anschlussöffnung 52 des jeweiligen Probenahme-Röhrchens 50 und ein zweites Dichtelement 30, insbesondere eine umlaufende Flachdichtung, zur Abdichtung eines Mittelteils 54 des jeweiligen Probenahme-Röhrchens 50 auf.

Die Anschlusselemente 12 sind beispielsweise aus Metall ausgebildet. Die Anschlussöffnung 52 des Probenahme-Röhrchens 50 tritt in den Aufnahmezylinder 26 des Anschlusselements 12 ein. Ein Anstoßen an den Metallboden des Zylinders, welches zum Glasbruch des aus Glas gebildeten Probenahme-Röhrchens 50 führen könnte, wird durch die erste Dichtung 28, beispielsweise ein O-Ring aus einem Fluorelastomer, der als Puffer dient, verhindert. Die Dichtigkeit des Anschlusses wird über die zweite Dichtung 30, beispielsweise eine Gummiflachdichtung, gewährleistet, welche durch das Probenahme-Röhrchen 50 auf dessen Ende gespannt wird. Dabei ist die Dichtigkeit unabhängig von dem Durchmesser 56 des Probenahme-Röhrchens 50 gewährleistet. Auf Grund der Eigenfestigkeit der Gummiflachdichtungen werden die Probenahme-Röhrchen 50 an ihrer Position gehalten und die Anschlüsse sind auch unter mechanischer Außeneinwirkung dicht.

Figur 4 zeigt einen schematischen Aufbau der Vorrichtung 100 zur automatisierten Probenahme von gasförmigen Stoffen nach einem Ausführungsbeispiel der Erfindung.

Zur automatisierten, teleoperierten Probenentnahme bzw. Begasen der Probenahme-Röhrchen 50 wird ein Gasleitsystem bestehend aus einem Durchflussregler 42 und einer Pumpe 40, beispielsweise einer Membranpumpe, verwendet, welche über eine Steuereinheit 60, beispielsweise ein Raspberry Pi - Computer, in Verbindung mit einer Steuerplatine 62 gesteuert und/oder geregelt wird.

Der Durchflussregler 42 ist zwischen der pumpenseitigen Einrichtung 13 und der Pumpe 40 pneumatisch angeordnet. Die Anschlusselemente 14 der pumpenseitigen Einrichtung 13 sind mit einer Ventilsteuerung 44 pneumatisch verbunden. Alternativ können die Anschlusselemente 14 selbst als Ventilsteuerung 44 ausgebildet sein.

Die Anschlusselemente 12 der umgebungsseitigen Einrichtung 11 sind mit der Umgebung 88 pneumatisch verbunden und können so den Luftstrom 90 aufnehmen und in die Probenahme-Röhrchen 50 leiten.

Die benötigte Gasmenge kann über das Steuerprogramm der Steuereinheit 60 geregelt werden. Hierbei wird der Volumenstrom mit dem Durchflussregler 42 kontinuierlich gemessen. Sobald das Probenahme-Röhrchen 50 mit dem eingestellten SOLL-Volumen beladen wurde, schließt das Magnetventil der Ventilsteuerung 44 und die Pumpe 40 schaltet ab.

Die Steuereinheit 60 weist dazu eine Verbindung zu dem Durchflussregler 42 und/oder der Ventilsteuerung 44 auf, um diese zu steuern und/oder zu regeln. Die elektrische Verbindung kann über die Steuerplatine 62 erfolgen.

Zur Steuerung und Datenübertragung können langreichweitige Funksysteme 64 eingesetzt werden, wie beispielsweise eine Funkverbindung (W-LAN, LoRA) zur Fernsteuerung des Systems. Um plattformunabhängig zu sein, kann die Vorrichtung 100 eine Batterie, beispielsweise einen LiFePo Akkumulator entsprechender Größe, verwenden.

Weiter kann ein Positionsbestimmungssystem 66 in der Vorrichtung 100 vorhanden sein, welches mit der Steuereinheit 60 elektrisch verbunden ist. Alternativ kann das Positionsbestimmungssystem 66 auch in die Steuereinheit 60 integriert sein.

Für jedes Probenahme-Röhrchen 50 können eigene Messvolumina definiert werden, sodass unterschiedliche Messkonfigurationen bei einmaliger Bestückung angewendet werden können.

Diese Parameter können auf einfache Weise konfiguriert werden. Während einer Messung / Probenahme können alle notwendigen Parameter in Echtzeit abgerufen werden:
Diese Parameter können beispielsweise Messparameter, ISO-Zeitstempel des Messzeitpunkts, Datum- und Zeitstempel, Geokoordinaten der Messposition, verwendetes Ventil und/oder Probenahme-Röhrchen 50, eingestellten SOLL-Gasvolumenstrom, gemessenen IST-Gasvolumenstrom und/oder gemessenes Gas-Gesamtvolumen umfassen.

Die während einer Messung akquirierten IST-Parameter können neben den SOLL-Parametern dokumentiert werden und können beispielsweise an eine Bodenstation 70 übertragen werden, beispielsweise bei einem Betrieb mit einem unbemannten Luftfahrzeug wie einer Drohne.

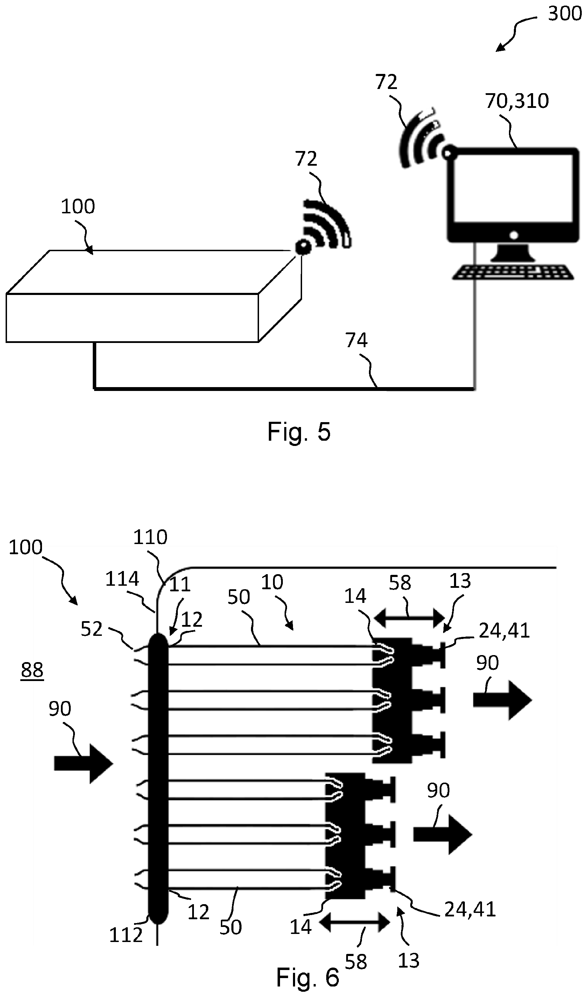

In Figur 5 ist dazu die Steuerung der Vorrichtung 100 über eine Bodenstation 70 dargestellt. Die Verbindung zur Bodenstation 70 kann dabei über eine LAN-Verbindung realisiert sein oder über ein Funksignal 72.

Die Bodenstation 70 kann dabei in eine Vorrichtung 300 zur Datenverarbeitung eingebunden sein, welche Mittel 60, 70, 310 (siehe Figur 4) zum, insbesondere automatischen, Ausführen der Probenahme aufweist.

Dazu kann ein Computerprogrammprodukt eingesetzt werden, welches Befehle umfasst, die bei ihrer Ausführung durch die als Computer 310 ausgebildete Bodenstation 70 oder die Steuereinheit 60 veranlassen, die Probenahme, insbesondere automatisch, auszuführen.

Figur 6 zeigt die Vorrichtung 100 mit der Probenhalterung 10 nach einem Ausführungsbeispiel der Erfindung.

Dabei erfolgt eine direkte Ansaugung des Luftstroms 90 ohne zusätzliche Komponenten. Diese Anordnung vermeidet mögliche Verunreinigungen bei der Luftansaugung/Gaszuführung, bzw. des Abscheidens der Gefahrstoffe in der Zuleitung zum Probenahme-Röhrchen 50.

Bei dieser Vorrichtung 100 wird nur eine bewegliche Anschlussbank der pumpenseitigen Einrichtung 13 verwendet, welche über einen Verschiebeweg 58 beweglich ist und in der Probenahme-Röhrchen 50 mit unterschiedlicher Länge befestigt werden können. Ansaugseitig wird ein austauschbares Wandelement 112 mit Durchbrüchen für die Probenahme-Röhrchen 50 eingesetzt. Jedes Probennahme- Röhrchen 50 ist in jeweils einen Durchbruch eingesetzt.

Dieses Wandelement 112 wird in die Außenwand 114 des Gehäuses 110 der Vorrichtung 100 eingefügt, beispielsweise über eine entsprechende Schiene mit Schnellverschluss. Damit befinden sich die Anschlussöffnungen 52 der Probenahme-Röhrchen 50 direkt in der zu untersuchenden Umgebung 88 und Schwierigkeiten beim Zufluss zu den Probenahme-Röhrchen 50 entfallen.

Die Vorrichtung 100 kann durch eine Klappvorrichtung, wie in Figur 7 dargestellt, derart erweitert werden, dass die Anschlussöffnungen 52 der Probenahme-Röhrchen 50 nur bei der Probennahme mit der Außenluft 90 der Umgebung 88 in Kontakt kommen, sodass Kontaminationen vermieden werden. Dazu weist die umgebungsseitige Einrichtung 11 mit gasdichten Verschlüssen 36, insbesondere schaltbaren gasdichten Verschlüssen 36, auf oder ist mit gasdichten Verschlüssen 36 pneumatisch verbunden.

Figur 8 zeigt die Vorrichtung 100 mit der Probenhalterung 10 nach einem weiteren Ausführungsbeispiel der Erfindung.

Dabei werden beidseitig Anschlussbänke der umgebungsseitigen und der pumpenseitigen Einrichtung 11, 13 verwendet. Ansaugseitig wird ein Schlauchsystem verwendet. Dieses kann beispielsweise mit einem Ansaugschnorchel verbunden werden.

Die Anschlusselemente 12 der umgebungsseitigen Einrichtung 11 sind dabei mit Verbindungsleitungen 32, insbesondere mit Ansaugschnorcheln 48, pneumatisch verbunden und können so den Luftstrom 90 aus der Umgebung 88 aufnehmen.

Der Vorteil dieser Variante ist, dass über den optionalen Ansaugschnorchel 48 an einer beliebigen Messposition die Luft angesaugt werden kann, beispielsweise zur Vermeidung von Down-Wash-Effekten beim Einsatz an Drohnen. Zudem sind die Probenahme-Röhrchen 50 im Probenhalter 10 kompakt an einem Ort angeordnet, was beispielsweise zur Zeiteinsparung beim Wechsel der Probenahme-Röhrchen 50 führt.

Die Dichtheit unter mechanischen Rütteleinwirkungen der Vorrichtung 100 kann durch den Einsatz von Gummiflachdichtungen als Dichtelemente 30 in den Anschlusselementen 12, 14 gewährleistet werden.

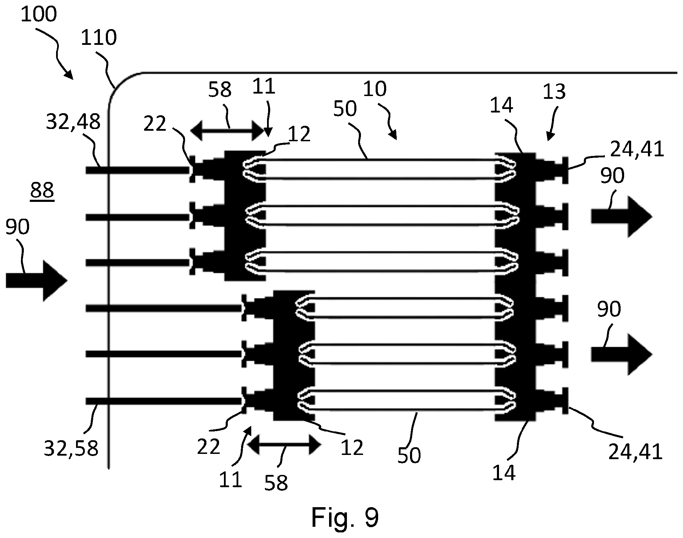

Bei dem Ausführungsbeispiel in Figur 8 sind die Anschlussbänke mit den pumpenseitigen Einrichtungen 13 von Anschlusselementen 14 axial verschiebbar angeordnet, während bei dem Ausführungsbeispiel in Figur 9 die umgebungsseitigen Einrichtungen 11 von Anschlusselementen 12 axial verschiebbar sind.

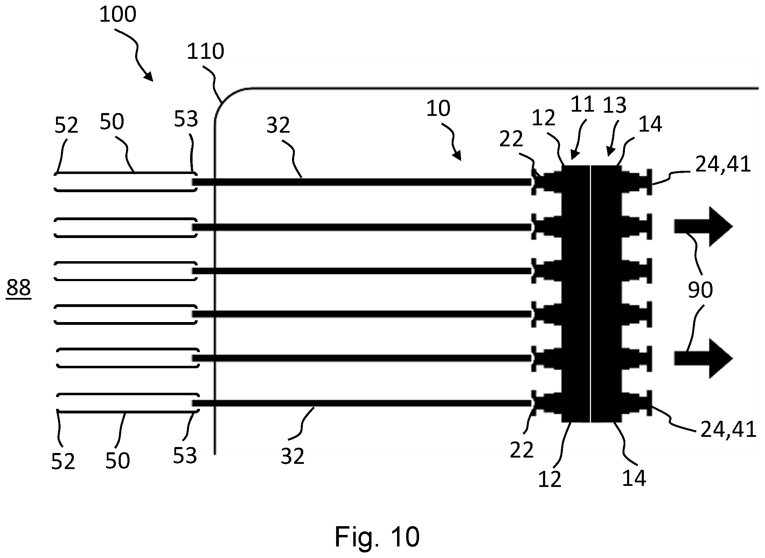

In Figur 10 ist die Vorrichtung 100 mit der Probenhalterung 10 nach einem weiteren Ausführungsbeispiel der Erfindung dargestellt.

Dabei sind die Anschlussbänke der umgebungsseitigen und der pumpenseitigen Einrichtung 11, 13 zusammengeführt.

Zwei Einrichtungen 11, 13 von Anschlusselementen 12, 14 sind so gasdicht miteinander verbunden. Dazu sind die zwei Einrichtungen 11, 13 in axialer Richtung 84 zusammengeschoben und gasdicht verbunden.

Jeweils das umgebungsseitige Anschlusselement 12 ist mittels einer Verbindungsleitung 32 mit einem Probenahme-Röhrchen 50 pneumatisch verbunden, dessen Anschlussöffnung 52 mit der Umgebung 88 pneumatisch verbunden ist.

Der Vorteil ist, dass bei dieser Variante die Probenahme-Röhrchen 50 außerhalb der Probenhalterung 10 oder des Gehäuses 110 der Vorrichtung 100 eingesetzt werden können. Dies kann insbesondere dann von Bedeutung sein, wenn eine Kombination aus den in den Figuren 6 bis 9 dargestellten Ausführungsbeispielen eingesetzt wird.

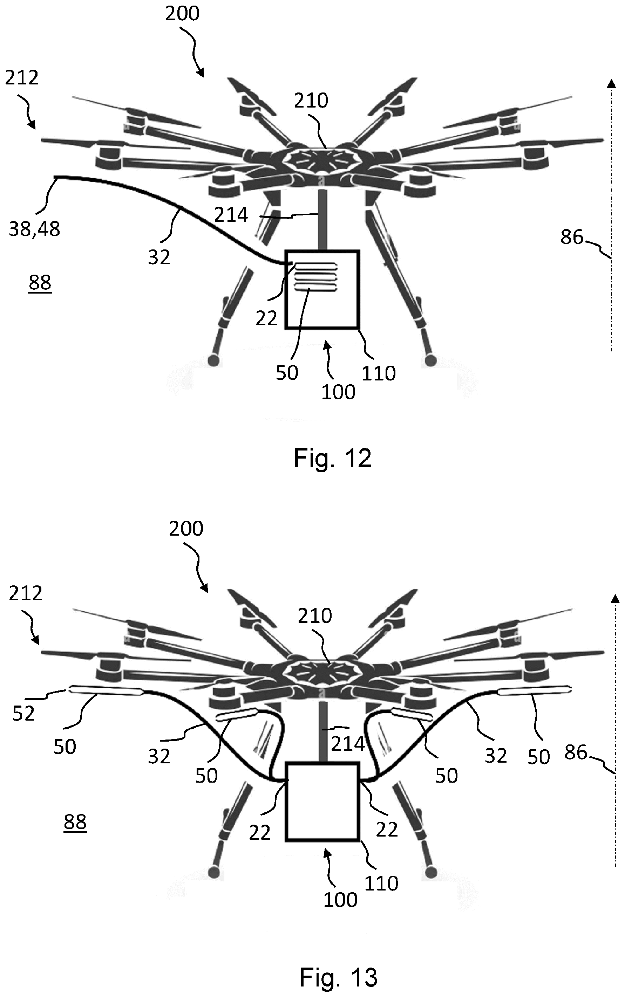

Alternativ kann auch eine Schlauchverlängerung der Verbindungsleitung 32 von der Ventilsteuerung 44 der Vorrichtung 100 zu einem einzelnen Probenhalter 10 mit zwei Anschlusselementen 12, 14 vorgesehen sein, welcher das Probenahme-Röhrchen 50 in einer günstigen, aber beliebigen Position am unbemannten Luftfahrzeug 210 (siehe Figur 13) hält.

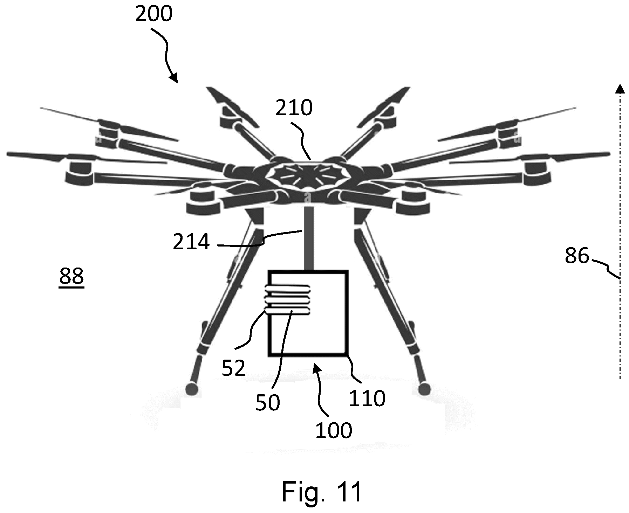

In Figur 11 ist eine mobile Plattform 200 in Form eines unbemannten Luftfahrzeugs 210, insbesondere eine Drohne, mit einer Vorrichtung 100 zur automatisierten Probenahme von gasförmigen Stoffen, insbesondere von Luft, mittels Probenahme-Röhrchen nach einem Ausführungsbeispiel der Erfindung dargestellt.

Die Vorrichtung 100 ist in einem Gehäuse 110 angeordnet, welches mit dem Luftfahrzeug 210 über ein Befestigungselement 214 verbunden ist, insbesondere abnehmbar verbunden ist.

Die Vorrichtung 100 kann dabei wie in den Ausführungsbeispielen in den Figuren 6 und 7 dargestellt ausgebildet sein.

Die Vorrichtung 100 kann dabei in einer vertikalen Richtung 86 unterhalb, wie dargestellt, oder oberhalb des Luftfahrzeugs 210 montiert werden. Ein Ansaugschnorchel ist nicht notwendig. Effekte durch den so genannten Down-Wash-Effekt des Rotors müssen dabei berücksichtigt werden und können bei dieser Anordnung des Messsignal verfälschen.

Figur 12 zeigt ein unbemanntes Luftfahrzeug 210 mit einer Vorrichtung 100 nach einem weiteren Ausführungsbeispiel der Erfindung.

Die Vorrichtung 100 kann dabei wie in den Ausführungsbeispielen in den Figuren 8 und 9 dargestellt ausgebildet sein. Die Eingangsöffnungen 38 der Verbindungsleitungen 32 können beispielsweise an einer lateralen Außenbegrenzung 212 des Luftfahrzeugs 210 angeordnet sein. Zusätzlich kann ein Ansaugschnorchel 48 an der Eingangsöffnung 38 der Verbindungsleitung 32 angeordnet sein.

Figur 13 zeigt ein unbemanntes Luftfahrzeug 210 mit einer Vorrichtung 100 nach einem weiteren Ausführungsbeispiel der Erfindung.

Bei dieser Variante können die Vorteile der direkten Ansaugung und die Vermeidung von so genannten Down-Wash-Effekten realisiert werden. Die Probenentnahme erfolgt direkt am Probenahme-Röhrchen 50. Dieses ist über eine Schlauchanordnung mit den Einrichtungen 12, 14 der Vorrichtung 100 verbunden.

Zwei Einrichtungen 11, 13 von Anschlusselementen 12, 14 der Vorrichtung 100 können dabei in axialer Richtung 84 zusammengeschoben und gasdicht verbunden sein. Die umgebungsseitigen Anschlusselemente 12 können mittels Verbindungsleitungen 32 mit Probenahme-Röhrchen 50 pneumatisch verbunden sein, deren Anschlussöffnungen 52 an der lateralen Außenbegrenzung 212 des Luftfahrzeugs 210 angeordnet sind.

Alternativ kann auch eine Schlauchverlängerung der Verbindungsleitung 32 direkt von der Ventilsteuerung 44 der Vorrichtung 100 zu einem einzelnen Probenhalter 10 mit zwei Anschlusselementen 12, 14 vorgesehen sein, welcher das Probenahme-Röhrchen 50 in einer günstigen, aber beliebigen Position am unbemannten Luftfahrzeug 210 hält.

Durch das kompakte Design und die Verwendung von kompakten Komponenten kann die Vorrichtung 100 an unterschiedliche robotischen Plattformen 200 zur georeferenzierten Probennahme eingesetzt werden.

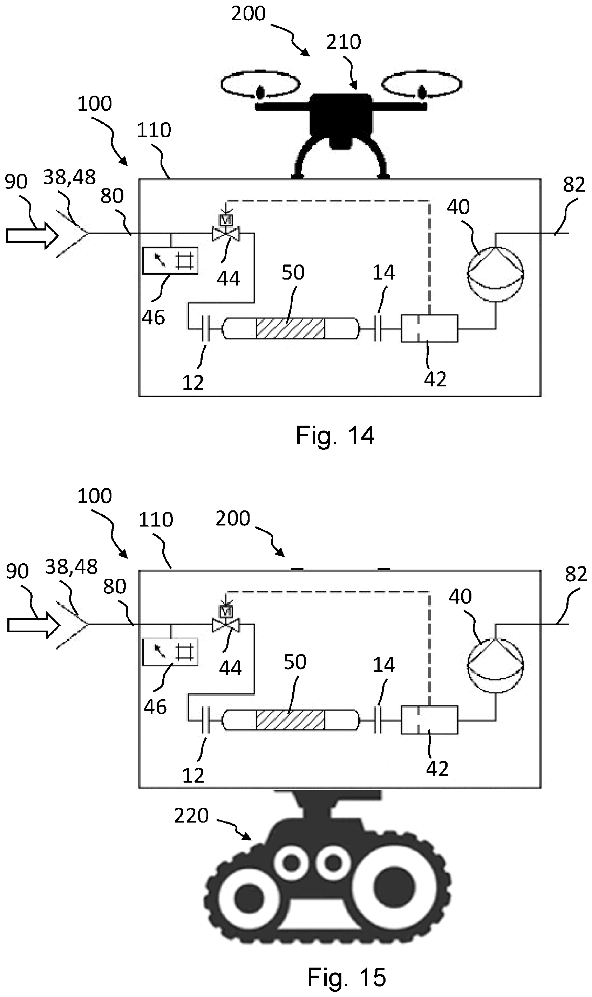

Figur 14 zeigt ein unbemanntes Luftfahrzeug 210 mit einer Vorrichtung 100 nach einem weiteren Ausführungsbeispiel der Erfindung.

Dabei ist die Vorrichtung 100 schematisch dargestellt. Der Luftstrom 90 wird dabei über einen Ansaugschnorchel 48 zu einem Einlass 80 des Gehäuses 110 der Vorrichtung geleitet.

Bei diesem Ausführungsbeispiel ist die Ventilsteuerung 44 vor den umgebungsseitigen Anschlusselementen 12 und dem Probenahme-Röhrchen 50 angeordnet. Der durch das Probenahme-Röhrchen 50 geführte Luftstrom 90 wird durch den Durchflussregler 42 und die Pumpe 40 gesteuert und verlässt das Gehäuse 110 an einem Auslass 82. Der Durchflussregler 42 ist mit der Ventilsteuerung 44 gekoppelt.

Zusätzlich können weitere Messwerte über ein Messgerät 46 am Einlass 80 bereits vor der Ventilsteuerung 44 erfasst werden.

In Figur 15 ist eine mobile Plattform 200 in Form einer robotischen Plattform 220, an der eine Vorrichtung 100 angeordnet ist, nach einem weiteren Ausführungsbeispiel der Erfindung dargestellt.

Die robotische Plattform 220 kann beispielsweise, wie dargestellt, ein kettengetriebenes Fahrzeug in Form einer Raupe sein.

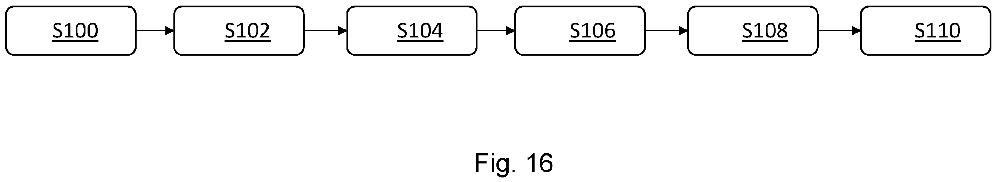

Figur 16 zeigt einen Messablauf eines Verfahrens zum Betreiben der Vorrichtung 100 nach einem Ausführungsbeispiel der Erfindung.

Zunächst wird In Schritt S100 die Vorrichtung 100 zur Verfügung gestellt.

In Schritt S102 kann optional eine Erstinstallation der nötigen Betriebssoftware durchgeführt werden.

In Schritt S104 findet die Inbetriebnahme der Vorrichtung 100 statt.

Danach werden in Schritt S106 Probenahme-Röhrchen 50 in die Probenhalterung 10 der Vorrichtung 100 eingelegt und die Vorrichtung 100 an einen Messort verbracht.

In Schritt S108 findet eine Probenahme von Gasproben, insbesondere von Luftproben, mit der Vorrichtung 100 statt.

Die Probenahme kann über ein Funksystem 70 ferngesteuert und/oder automatisiert durchgeführt werden.

In Schritt S110 wird die Probenahme beendet, die Vorrichtung 100 rückgeführt, die Probenahme-Röhrchen 50 entnommen und die Vorrichtung 100 außerbetrieb genommen.

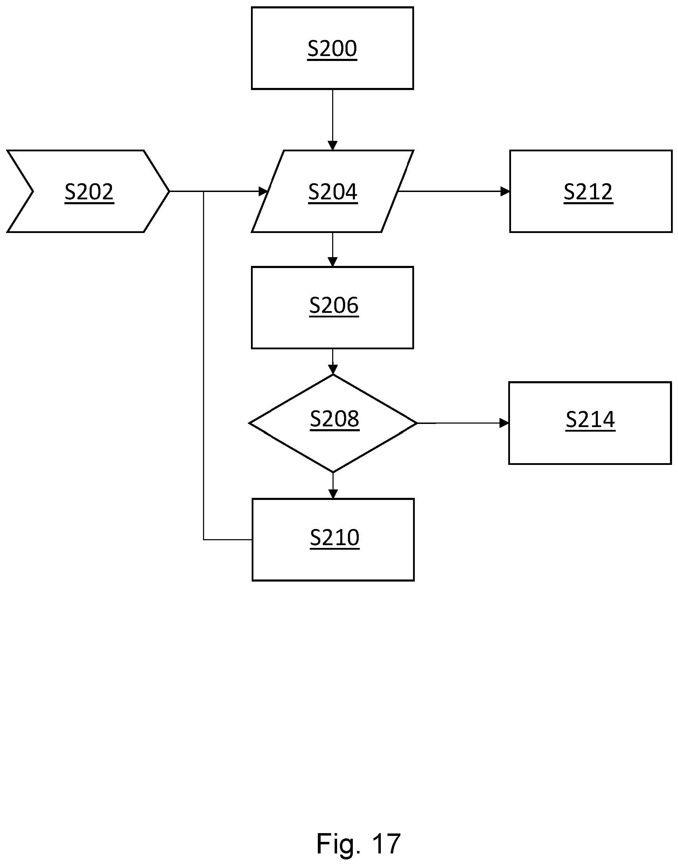

Figur 17 einen Ablauf einer Probenahme des Verfahrens nach einem Ausführungsbeispiel der Erfindung.

Beim Durchführen der Probenahme können mehrere Probenahme-Röhrchen 50 in einer Schleife nacheinander ausgewählt und mit Gas befüllt werden.

In Schritt S200 wird die Vorrichtung 100 initialisiert und in Schritt S204 zunächst auf einen Trigger gewartet.

Erfolgt der Trigger in Schritt S202, wird in Schritt S206 die Probenahme mit dem ersten Probenahme-Röhrchen 50 durchgeführt.

Der Warteschritt S204 kann durch manuelle oder automatische Eingabe mit dem Schritt S212 beendet werden.

Beim Durchführen der Probenahme wird wenigstens ein Probenahme-Röhrchen 50 durch Öffnen eines Ventils eines pumpenseitigen Anschlusselements 14 ausgewählt und eine Pumpe 40 der Vorrichtung 100 für eine vorgegebene Zeitspanne aktiviert, sodass das wenigstens eine Probenahme-Röhrchen 50 mit Gas befüllt wird. Nach Beenden der Probenahme wird das Ventil geschlossen.

Nach der erfolgten Probenahme in Schritt S206 wird in Schritt S208 geprüft, ob die maximale Zahl an Probenahme-Röhrchen 50 bereits verwendet wurde.

Falls dies der Fall ist, wird in Schritt S214 der Ablauf beendet.

Falls dies nicht der Fall ist, wird in Schritt S210 ein Zähler für das Probenahme-Röhrchen 50 erhöht und wieder in den Warteschritt S204 verzweigt.

### Bezugszeichen

- 10: Probenhalterung
- 11: Einrichtung
- 12: Anschlusselement
- 13: Einrichtung
- 14: Anschlusselement
- 16: Grundplatte
- 18: Auflagebank
- 20: Schlittenschiene
- 22: Gasanschlussstutzen
- 24: Gasanschlussstutzen
- 26: Aufnahmezylinder
- 28: Dichtelement
- 30: Dichtelement
- 32: Verbindungsleitung
- 34: Verbindungsleitung
- 36: Verschluss
- 38: Eingangsöffnung
- 40: Pumpe
- 41: Pumpenanschluss
- 42: Durchflussregler
- 44: Ventilsteuerung
- 46: Messgerät
- 48: Ansaugschnorchel
- 50: Probenahme-Röhrchen
- 52: Anschlussöffnung
- 53: Anschlussöffnung
- 54: Mittelteil
- 56: Durchmesser
- 57: Länge
- 58: Verschiebeweg
- 60: Steuereinheit
- 62: Steuerplatine
- 64: Funksystem
- 66: Positionsbestimmungssystem
- 68: Batterie
- 70: Bodenstation
- 72: Funksignal
- 74: LAN-Verbindung
- 80: Einlass
- 82: Auslass
- 84: axiale Richtung
- 85: Querrichtung
- 86: vertikale Richtung
- 88: Umgebung
- 90: Luftstrom
- 100: Vorrichtung
- 110: Gehäuse
- 112: Wandelement
- 114: Außenwand
- 200: mobile Plattform
- 210: Luftfahrzeug
- 212: Außenbegrenzung
- 214: Befestigungselement
- 220: robotische Plattform
- 300: Vorrichtung zur Datenverarbeitung
- 310: Computer

## Patentansprüche

1. Vorrichtung (100) zur automatisierten Probenahme von gasförmigen Stoffen, insbesondere von Luft, mittels Probenahme-Röhrchen (50) zur Aufnahme der gasförmigen Stoffe, umfassend
i) eine Probenhalterung (10), mit wenigstens einer Einrichtung (11, 13), die wenigstens eine umgebungsseitige Einrichtung (11) oder wenigstens eine pumpenseitige Einrichtung (13) ist, mit Anschlusselementen (12, 14), wobei jedes der Probenahme-Röhrchen (50) an jeweils eines der Anschlusselemente (12, 14) der wenigstens einen umgebungsseitigen Einrichtung (11) und/oder der wenigstens einen pumpenseitigen Einrichtung (13) gasdicht anschließbar ist,
ii) Pumpenanschlüsse (41) für eine Pumpe (40), wobei jeweils ein pumpenseitiges Anschlusselement (14) der pumpenseitigen Einrichtung (13) der wenigstens einen Einrichtung (11, 13) über den jeweiligen Pumpenanschluss (41) mit der Pumpe (40) pneumatisch verbunden ist,
iii) eine Steuereinheit (60), welche einen Betrieb der Pumpe (40) steuert und/oder regelt,
wobei die umgebungsseitige Einrichtung (11) von Anschlusselementen (12) mit einer Umgebung (88) pneumatisch verbunden ist.

2. Vorrichtung nach Anspruch 1, wobei die wenigstens eine Einrichtung (11, 13) von Anschlusselementen (12, 14) sowohl eine umgebungsseitige Einrichtung (11) als auch eine pumpenseitige Einrichtung (13) aufweist und jedes der Probennahme-Röhrchen (50) zwischen jeweils einem der Anschlusselemente (12, 14) der umgebungsseitigen und der pumpenseitigen Einrichtung (11, 13) gasdicht angeordnet ist.
und/oder wobei die wenigstens eine Einrichtung (11, 13) von Anschlusselementen (12, 14) sowohl eine umgebungsseitige Einrichtung (11) als auch eine pumpenseitige Einrichtung (13) aufweist, deren Anschlusselemente (12, 14) gasdicht miteinander verbunden sind und jeweils das umgebungsseitige Anschlusselement (12) mittels einer Verbindungsleitung (32) mit dem Probenahme-Röhrchen (50) pneumatisch verbunden oder verbindbar ist und das Probenahme-Röhrchen (50) mit der Umgebung (88) pneumatisch verbunden ist,
und/oder wobei die wenigstens eine Einrichtung (11, 13) von Anschlusselementen (12, 14) sowohl eine umgebungsseitige Einrichtung (11) als auch eine pumpenseitige Einrichtung (13) aufweist, deren Anschlusselemente (12, 14) jeweils in einer axialen Richtung (84) einander gegenüber liegend angeordnet sind und wenigstens eines der beiden einander gegenüber liegenden Einrichtungen (11, 13) von Anschlusselementen (12, 14) in der axialen Richtung (84) verschiebbar ist
und/oder wobei die Anschlusselemente (14) der pumpenseitigen Einrichtung (13) in einer Querrichtung (85) nebeneinander angeordnet sind
und/oder, wobei die Anschlusselemente (12) der umgebungsseitigen Einrichtung (11) in einer Querrichtung (85) nebeneinander angeordnet sind.

3. Vorrichtung nach einem der vorhergehenden Ansprüche, wobei die umgebungsseitige Einrichtung (11) ein Wandelement (112) mit Durchbrüchen aufweist oder als Wandelement (112) mit Durchbrüchen ausgebildet ist, wobei ein Ende der Probennahme-Röhrchen (50) in die Durchbrüche einsteckbar ist,
und/oder wobei die wenigstens eine Einrichtung (11, 13) von Anschlusselementen (12, 14) zur Aufnahme von Probenahme-Röhrchen (50) mit unterschiedlichem Durchmesser (56) und/oder unterschiedlicher Länge (57) ausgebildet sind.

4. Vorrichtung nach einem der vorhergehenden Ansprüche, wobei die Anschlusselemente (12, 14) Gasanschlussstutzen (22, 24), insbesondere Steckanschlüsse, für wenigstens eine Verbindungsleitung (32, 34), aufweisen, welche mit der Umgebung (88) oder der Pumpe (40) pneumatisch verbunden ist.

5. Vorrichtung nach einem der vorhergehenden Ansprüche, wobei die Probenhalterung (10) zwischen den Einrichtungen (11, 13) Auflagebänke (18) zur Abstützung der Probenahme-Röhrchen (50) aufweist
und/oder wobei die Probenhalterung (10) Schlittenschienen (20) aufweist, auf denen wenigstens eine der Einrichtungen (11, 13) von Anschlusselementen (12, 14) in axialer Richtung (84) verschiebbar angeordnet ist.

6. Vorrichtung nach einem der vorhergehenden Ansprüche, wobei die Anschlusselemente (12, 14) der wenigstens einen Einrichtung (11, 13) jeweils wenigstens ein erstes Dichtelement (28), insbesondere einen O-Ring, zur Abdichtung einer Anschlussöffnung (52) des jeweiligen Probenahme-Röhrchens (50) und/oder wenigstens ein zweites Dichtelement (30), insbesondere eine umlaufende Flachdichtung, zur Abdichtung eines Mittelteils (54) des jeweiligen Probenahme-Röhrchens (50) aufweisen
und/oder wobei zwischen der pumpenseitigen Einrichtung (13) und der Pumpe (40) ein Durchflussregler (42) pneumatisch angeordnet ist.

7. Vorrichtung nach einem der vorhergehenden Ansprüche, wobei die Anschlusselemente (14) der pumpenseitigen Einrichtung (13) mit einer Ventilsteuerung (44) pneumatisch verbunden sind oder als Ventilsteuerung (44) ausgebildet sind, insbesondere wobei die Steuereinheit (60) eine Verbindung zu dem Durchflussregler (42) und/oder der Ventilsteuerung (44) aufweist, um diese zu steuern und/oder zu regeln,
insbesondere wobei die Steuereinheit (60) eine Steuerplatine (62) zum Steuern und/oder Regeln der Pumpe (40) und/oder des Durchflussreglers (42) und/oder der Ventilsteuerung (44) aufweist oder mit der Steuerplatine (62) elektrisch verbunden ist.

8. Vorrichtung nach einem der vorhergehenden Ansprüche, umfassend ein Funksystem (64), insbesondere ein langreichweitiges Funksystem, und/oder ein Positionsbestimmungssystem (66), welche mit der Steuereinheit (60) elektrisch verbunden sind.

9. Vorrichtung nach einem der vorhergehenden Ansprüche, wobei die umgebungsseitige Einrichtung (11) gasdichte Verschlüsse (36), insbesondere schaltbare gasdichte Verschlüsse (36), aufweist oder mit gasdichten Verschlüssen (36) pneumatisch verbunden ist
und/oder wobei die umgebungsseitigen Anschlusselemente (12) mit Verbindungsleitungen (32), insbesondere mit Ansaugschnorcheln (48), pneumatisch verbunden sind
und/oder wobei die wenigstens eine Einrichtung (11, 13) von Anschlusselementen (12, 14) sowohl eine umgebungsseitige Einrichtung (11) als auch eine pumpenseitige Einrichtung (13) aufweist, die in axialer Richtung (84) zusammengeschoben und gasdicht verbunden sind und wobei die umgebungsseitigen Anschlusselemente (12) mittels Verbindungsleitungen (32) mit Probenahme-Röhrchen (50) pneumatisch verbunden sind, deren Anschlussöffnungen (52) mit der Umgebung (88) pneumatisch verbunden sind,
insbesondere wobei wenigstens eines der Probenahme-Röhrchen (50) in einem Probenhalter (10) mit wenigstens zwei Einrichtungen (11, 13) von Anschlusselementen (12, 14) angeordnet ist, wobei eines der beiden Anschlusselemente (12, 14) mit der Verbindungsleitung (32) pneumatisch verbunden ist.

10. Vorrichtung nach einem der vorhergehenden Ansprüche, wobei die Steuereinheit (60) ausgebildet ist, bei einer Probenahme für jedes Probenahme-Röhrchen (50) spezifisch wenigstens einen der Parameter abzuspeichern:
Messparameter,
ISO-Zeitstempel des Messzeitpunkts,
Datum- und Zeitstempel,
Geokoordinaten der Messposition,
verwendetes Ventil und/oder Probenahme-Röhrchen (50),
eingestellter SOLL-Gasvolumenstrom,
gemessener IST-Gasvolumenstrom und/oder gemessenes Gas-Gesamtvolumen.

11. Mobile Plattform (200) mit einer Vorrichtung (100) nach einem der vorhergehenden Ansprüche, umfassend ein unbemanntes Luftfahrzeug (210), insbesondere eine Drohne, oder eine robotische Plattform (220), wobei die Vorrichtung (100) in einem Gehäuse (110) angeordnet ist, welches mit dem Luftfahrzeug (210) oder der robotischen Plattform (220) verbunden ist, insbesondere abnehmbar verbunden ist.

12. Mobile Plattform nach Anspruch 11, wobei umgebungsseitige Anschlusselemente (12) der Vorrichtung (100) mit Verbindungsleitungen (32), insbesondere mit Ansaugschnorcheln (48), pneumatisch verbunden sind, deren Eingangsöffnungen (38) an einer lateralen Außenbegrenzung (212) des Luftfahrzeugs (210) angeordnet sind
und/oder wobei eine umgebungsseitige Einrichtung (11) und eine pumpenseitige Einrichtung (13) der wenigstens einen Einrichtung (11, 13) von Anschlusselementen (12, 14) der Vorrichtung (100) in axialer Richtung (84) zusammengeschoben und gasdicht verbunden sind und wobei die umgebungsseitigen Anschlusselemente (12) mittels Verbindungsleitungen (32) mit Probenahme-Röhrchen (50) pneumatisch verbunden sind, deren Anschlussöffnungen (52) an einer lateralen Außenbegrenzung (212) des Luftfahrzeugs (210) angeordnet sind.

13. Verfahren zum Betreiben einer Vorrichtung (100) nach einem der Ansprüche 1 bis 10, umfassend
i) Inbetriebnahme der Vorrichtung (100);
ii) Einlegen von Probenahme-Röhrchen (50) in einer Probenhalterung (10) der Vorrichtung (100);
iii) Verbringen der Vorrichtung (100) an einen Messort;
iv) Durchführen einer automatisierten Probenahme von Gasproben, insbesondere von Luftproben, mit der Vorrichtung (100);
v) Beenden der Probenahme und Rückführen der Vorrichtung (100);
vi) Entnahme der Probenahme-Röhrchen (50);
vii) Außerbetriebnahme der Vorrichtung (100).

14. Verfahren nach Anspruch 13, wobei beim Durchführen der Probenahme wenigstens ein Probenahme-Röhrchen (50) durch Öffnen eines Ventils eines pumpenseitigen Anschlusselements (14) ausgewählt und eine Pumpe (40) der Vorrichtung (100) für eine vorgegebene Zeitspanne aktiviert wird, sodass das wenigstens eine Probenahme-Röhrchen (50) mit Gas befüllt wird und wobei das Ventil nach Beenden der Probenahme geschlossen wird und/oder wobei beim Durchführen der Probenahme mehrere Probenahme-Röhrchen (50) in einer Schleife nacheinander ausgewählt und mit Gas befüllt werden
und/oder wobei die Probenahme mittels einer mobilen Plattform (200) nach einem der Ansprüche 11 bis 12 durchgeführt wird, insbesondere wobei die Probenahme mittels eines unbemannten Luftfahrzeugs (210), insbesondere einer Drohne, oder einer robotischen Plattform (220) durchgeführt wird
und/oder wobei die Probenahme über ein Funksystem (70) ferngesteuert und/oder automatisiert durchgeführt wird.

15. Computerprogrammprodukt umfassend Befehle, die bei ihrer Ausführung durch einen Computer (310) diesen dazu veranlassen, ein Verfahren nach einem der Ansprüche 13 bis 14, insbesondere automatisch, auszuführen.

16. Vorrichtung (300) zur Datenverarbeitung, aufweisend Mittel (60, 70, 310) zum, insbesondere automatischen, Ausführen eines Verfahrens nach einem der Ansprüche 13 bis 14.
